# EUROPEAN PATENT SPECIFICATION

(11) **EP 1 480 907 B1**
(45) Date of publication and mention of the grant of the patent: **28.09.2011**
(21) Application number: 03713122.4
(22) Date of filing: 25.02.2003
(51) Int. Cl.: C01B 3/50

(54) **SYSTEM FOR GENERATING HYDROGEN FUEL TO A FUEL CELL**
SYSTEM ZUR ERZEUGUNG VON WASSERSTOFF-BRENNSTOFF FÜR EINE BRENNSTOFFZELLE
SYSTEME DE GENERATION DE COMBUSTIBLE A HYDROGENE POUR UNE PILE A COMBUSTIBLE

(30) Priority: 27.02.2002 SE 0200589
(43) Date of publication of application: 01.12.2004
(60) Divisional application: 07007482.8
(73) Proprietor: VOLVO TECHNOLOGY CORPORATION, 405 08 Göteborg (SE)
(72) Inventor: PETERSSON, Martin, S-425 43 HISINGS BACKA (SE); ANDERSSON, Bengt, S-411 11 Göteborg (SE)
(74) Representative: Fröhling, Werner Otto
(86) International application number: PCT/SE2003/000314
(87) International publication number: WO 2003/072493

(56) References cited:
- EP-A1- 0 729 196
- WO-A1-99/06138
- WO-A1-99/19456
- DE-A1- 10 034 401
- US-A- 4 117 079
- US-A- 5 229 102
- US-A- 6 090 312
- US-A- 6 129 861
- DATABASE WPI Week 200160, Derwent Publications Ltd., London, GB; Class E36, AN 2001-538891, XP002963817 & JP 2001 139304 A (TOSHIBA KK) 22 May 2001
- ONSTOT W.J. ET AL.: 'Design aspects of membrane reactors for dry reforming of methane for the production of hydrogen' IND. ENG. CHEM. RES. vol. 40, 2001, pages 242 - 251, XP002963816
- POSHUSTA JOSEPH C. ET AL.: 'Separation of light gas mixtures using SAPO-34 membranes' AICHE JOURNAL vol. 46, no. 4, April 2000, page 779

## Description

### TECHNICAL FIELD:

The present invention relates to a system for generating hydrogen fuel for a fuel cell, with the system comprising a process for reforming a primary fuel in order to form hydrogen. The invention is intended, in particular, for mobile applications in which the fuel cell constitutes a power source for driving and/or an additional power source (frequently termed APU - auxiliary power unit) in some type of means of transportation, such as a private car, lorry, bus, plant machine, truck, boat, airplane, helicopter, or space vehicle.

### PRIOR ART:

Fuel cells are a very interesting power source because of their low discharges of environmentally hazardous substitutes. However, in order to make the technique seriously competitive as compared with more traditional power sources such as combustion engines, there is a need for further improvements such as an increase in efficiency and a decrease in costs. Particularly for mobile applications, there is also a great need for fuel cell systems to be light and to require less space.

The fuel cells which are nowadays regarded as being of the greatest interest for vehicle applications are what are termed PEM (proton exchange membrane) fuel cells, which use hydrogen as the fuel. In the fuel cell, hydrogen reacts with oxygen, in connection with which it is possible to extract electrical energy (electric current) while water is formed.

Since there are problems involved in distributing and storing hydrogen, it is more expedient, particularly for mobile applications, to use another fuel, i.e. a primary fuel, which, by means of what is termed reforming, is converted to hydrogen in a system connected to the fuel cell. The primary fuel can consist of a hydrocarbon compound such as methanol, ethanol, petrol, diesel fuel, jet propulsion fuel, biogas or natural gas. In order for this type of fuel cell system to function satisfactorily, it is important that the generation of the primary fuel, i.e. the reforming together with any possible purification steps, should take place efficiently. In a general manner, while previous developments have resulted in the actual fuel cell decreasing in size, peripheral systems, such as the system for generating the fuel, have not been developed as rapidly.

The reforming of the primary fuel to produce hydrogen takes place by means of several different chemical reactions, in part depending on the type of primary fuel. The process can also be constructed in slightly different ways. In a general manner, the reforming results in the hydrocarbon principally being converted into hydrogen (H₂), carbon monoxide (CO) and carbon dioxide (CO₂).

In the reforming, hydrocarbon compounds, air and water (H₂O) are mixed with reformer catalyst in a reaction chamber, with the hydrocarbon compounds in the main being converted, by means of steam reforming, and/or partial oxidation at elevated temperature, into hydrogen and CO. Depending on the temperature, for example, certain hydrocarbons, such as methanol, can then principally form hydrogen and CO₂. During this fuel reforming, another important reaction, i.e. what is termed the WGS reaction (water gas shift reaction) also takes place:

H₂O + CO (←)→ CO₂ + H₂ (1)

As indicated in reaction 1, the WGS reaction is what is termed an equilibrium reaction, which means that the reaction also goes to the left. Whether the net reaction goes to the right or the left depends on operational conditions, such as temperature, and the concentrations of the participating substances. For example, the net reaction will go to the right if water or CO is supplied to a reaction mixture which is in equilibrium. The same thing occurs if CO₂ or hydrogen is removed from the reaction mixture. While it is in principal desirable, in this connection, to drive the reaction as far as possible to the right in order to form the greatest possible quantity of hydrogen, other parameters, such as the reaction rate, must also be taken into consideration. At the relatively high temperatures which are appropriate for steam reforming and partial oxidation, the equilibrium of reaction 1 is displaced to the left, that is towards the formation of water and CO. In order to increase the formation of hydrogen, and in order to decrease the quantity of CO, which is normally not wanted in a fuel cell, conventional systems normally include a second reforming step in which the WGS reaction is allowed, after the process gas formed in the first step has been cooled, to proceed at a lower temperature such that the equilibrium is displaced to the right.

After the reforming (including a second WGS step), the gas mixture which is formed in conventional reforming processes typically contains approx. 2% CO. However, this concentration has to be decreased to at least less than approx. 0.1% since CO deactivates the fuel cell catalyst; for this reason, an additional step, frequently termed CO clean-up, is normally required for cleaning the hydrogen fuel of CO.

The predominant reason for a cleaning step being necessary for separating CO from the flow of hydrogen fuel is that the WGS reaction (reaction 1) is limited by its equilibrium. The temperature is in this case an important parameter in that, while an increase in temperature leads to the reaction rate increasing, it also leads to the equilibrium being displaced to the left so that less hydrogen is produced. If the reaction is allowed to proceed at a lower temperature in order to increase the yield of hydrogen, the reforming device which is then required is so large that it is not suitable for mobile applications. At the temperature which is required in order to obtain a sufficiently high reaction rate in a relatively small, mobile system, the formation of hydrogen is far from being complete and, as a result, the concentration of CO is not negligibly small.

Traditionally, the concentration of CO has been decreased in the cleaning step by means of what is termed the selective oxidation of CO. A disadvantage of this method is that it has not been possible to increase the selectivity beyond the stage where approx. 5% of the hydrogen is also oxidized. In other words, approx. 5% of the fuel is consumed even before it has reached the fuel cell. In addition, this method requires complicated temperature control in order to ensure that an even larger quantity of hydrogen is not consumed.

As an alternative to selective oxidation for cleaning the fuel, EP 1065741 proposed, for example, using a membrane which is selectively permeable for hydrogen. This separation technique normally exploits the fact that hydrogen molecules and hydrogen atoms are smaller than those of other substances. In general, however, such hydrogen membranes exhibit relatively low permeability, resulting in the membranes giving rise to a large fall in pressure, overcoming which requires a substantial quantity of energy. Alternatively, a large membrane area is required, something which in turn gives rise to a relatively extensive, heavy and space-demanding system.

WO99/06138 discloses the use of a non-porous CO₂-selective membrane, composed of a polymer and an ammonium halide salt, for separating CO₂ from a gas mixture for the purpose of cleaning the hydrogen and/or driving reaction 1 further to the right Apart from in a special case using methanol as the primary fuel, the systems which are proposed are divided, in the conventional manner, into several process steps, where a step for converting the primary fuel into CO and hydrogen, inter alia, is followed by a special step which is intended for the WGS reaction. It is proposed that the membrane should be included in the WGS step or constitute an additional step in the system. In addition, all the systems proposed include a concluding methodization step in which the hydrogen gas is cleaned by the remaining CO and CO₂ being converted into methane and water while consuming hydrogen.

In order to increase the possibilities for commercializing fuel cells, it is very desirable to improve the fuel generating systems, and increase their efficiency, still further.

### ACCOUNT OF THE INVENTION:

The object of the present invention is to make available a fuel generating system for a fuel cell which, as compared with the prior art, provides more efficient fuel generation and a smaller, simpler and more robust system. This object is achieved by means of a system whose features are given in patent claim 1 below. The object is also achieved by means of a system whose features are given in patent claim 19 below. Advantageous further developments and variants of the invention are described in the dependent patent claims. A basic idea behind the invention is the advantageous use of ceramic membranes.

The invention provides a system for generating hydrogen fuel for a fuel cell, which system comprises a device for implementing a reforming process which converts primary fuel into hydrogen and also a membrane which exhibits selective permeability for CO₂. The invention is characterized in that the membrane is essentially composed of ceramic material which exhibits a microporous structure. A major advantage of ceramic membranes is their tolerance of temperature and chemicals, something which enables them to be applied even in exposed positions in the system but nevertheless function without problems over a long period of time. Ceramic membranes can also be arranged to exhibit a high degree of selectivity for (an) intended gas component(s). In addition, ceramic membranes are well-suited for being coated with catalyst material, thereby making it possible to create a large partial pressure difference over the membrane for the gas component which it is desired to separate by means of the gas component being formed or consumed at the catalyst material close to the membrane surface. Increasing the partial pressure difference increases the efficiency of the transport through the membrane still further. Removing CO₂ which has formed from the system is advantageous both in the reforming process for driving the WGS reaction towards an increased formation of hydrogen and in a later stage in the fuel generation for increasing the enrichment of hydrogen. A ceramic membrane can consequently be used for driving the WGS reaction towards an increased formation of hydrogen at higher temperatures than other types of membrane. This makes it possible to combine an increased reaction rate, to which the high temperature gives rise, with an increased efficiency, to which the removal of CO₂ gives rise by way of driving the WGS reaction.

In a first preferred embodiment of the invention, the primary side of the membrane faces a first chamber, which first chamber is intended to be the reaction chamber for at least a part of the reforming process. This part of the reforming process can, for example, comprise the WGS reaction. The first chamber is preferably intended as a reaction chamber for a reforming process which comprises converting primary fuel to hydrogen and CO/CO₂, inter alia. This conversion principally takes place by means of steam reforming and/or partial oxidation at a temperature which is so high that the equilibrium in the WGS reaction is powerfully displaced to the left. By means of having the primary side of the temperature-tolerant membrane face such a reaction chamber, it is possible to remove CO₂, thereby making it possible to drive the WGS reaction towards an increased production of hydrogen despite the fact that temperatures are very high. This arrangement enables the conversion of primary fuel and the WGS reaction to take place in the same reaction chamber, thereby making it possible to avoid the conventional solution involving a subsequent reforming step in which the WGS reaction is allowed to proceed at a lower temperature. A further advantage of this arrangement is that the entire reforming process proceeds at a higher temperature than is conventionally the case, resulting in an increase in the reaction rates. This in turn means that it is possible to decrease the dwell time in the reforming step, in connection with which the system can be made smaller and lighter.

In a second preferred embodiment of the invention, the primary side of the membrane is at least partially coated with a layer of reformer catalyst. As a result, CO₂ will in the main be formed at the surface of the membrane, thereby providing more efficient removal of the CO₂ through the membrane. By means of other expedient configurations of the system, and good control of system parameters such as mass flows, temperature, pressure and dwell time, the present invention provides a very efficient formation of hydrogen and a very low concentration of CO in the flow of hydrogen fuel to a fuel cell. This thereby achieves a high degree of efficiency in the generation of fuel and a decrease in the need for a cleaning step for separating CO from the flow of hydrogen fuel to the fuel cell. When the system is controlled optimally, the invention even provides the possibility of eliminating this cleaning step entirely. This simplifies the system appreciably as compared with the prior art.

By providing a membrane which exhibits selective permeability for CO and is essentially composed of ceramic material, it is possible to separate CO from the flow of hydrogen fuel in a simpler and more efficient manner than by means of conventional technology such as what is termed selective oxidation and hydrogen-permeable filters. For example, a CO-permeable membrane can be made more selective than what is termed selective oxidation, and the membrane does not require any complicated temperature control, either. Furthermore, a CO-permeable membrane can be constructed so as to exhibit a relatively high permeability which docs not give rise to the back pressure problems which are linked to hydrogen-permeable membranes. A major advantage of ceramic membranes is their tolerance of temperature and chemicals, something which enables them to be applied even in exposed positions in the system but nevertheless function without problems over a long period of time. Ceramic membranes can also be arranged to exhibit a high degree of selectivity for (an) intended gas component(s). In addition, ceramic membranes are well-suited for being coated with catalyst material, thereby making it possible to create a large partial pressure difference over the membrane for the gas component which it is desired to separate by means of the gas component being formed or consumed at the catalyst material close to the membrane surface. Increasing the partial pressure difference increases the efficiency of the transport through the membrane still further.

The primary side of the membrane faces a first channel, through which first channel the flow of hydrogen fuel is arranged to pass, and the secondary side of the membrane is at least partially coated with a layer of oxidation catalyst. As a result, most of the CO is consumed immediately after transport through the membrane, resulting in a large partial pressure difference for CO across the membrane.

The secondary side of the membrane faces a second channel, through which second channel a flow of an oxygen-containing flushing gas, preferably air, is arranged to pass. This results in efficient oxidation of CO from the secondary side of the membrane. The flow of flushing gas is preferably arranged to pass in a direction which is essentially opposite to a main direction of flow in the first channel. This arrangement provides what is an overall increase in the concentration difference or partial pressure difference for CO across the membrane, in turn providing more efficient transport of CO across the membrane.

The membrane also exhibits selective permeability for CO₂. The hydrogen is further enriched in this way, thereby making it possible for the fuel cell to use a larger proportion of the hydrogen before the hydrogen partial pressure becomes too low. In this way, this feature results in the hydrogen being used more efficiency and consequently in the primary fuel being used more efficiently.

### BRIEF DESCRIPTION OF THE FIGURES:

The invention will be further described below with reverence to the following figures where:
- Figure 1: shows a diagram of a first advantageous embodiment of the invention, and
- Figure 2: shows a diagram of a membrane having a selective permeability for CO.

### DESRIPTION OF EMBODIMENT(S):

The expression "system for generating hydrogen fuel for a fuel cell" refers, in the main, to the process of reforming primary fuel to produce hydrogen, inter alia, and to any possible process steps for cleaning the hydrogen which has been formed in the reforming process. Other processes/devices can also be included in the system. The expression "reforming" comprises the conversion of primary fuel into hydrogen and CO/CO₂, inter alia, and what is termed the WGS reaction. The expression "primary fuel" refers to hydrocarbon-based substances such as methanol, ethanol, petrol, diesel fuel, jet propulsion fuel, biogas or natural gas, or mixtures thereof.

"The primary side of a membrane" refers to the side which faces the gas mixture from which a, or some, gas component(s) is/are to be separated. "The second side of a membrane" refers to the opposite side, i.e. the side through which gas components which have been allowed to pass through the membrane emerge.

The expression that "a membrane exhibits a selective permeability for a certain gas component", for example CO or CO₂, refers to the fact that the membrane exhibits a greater tendency to allow just this gas component to pass through as compared with other gas components of interest in the gas mixture. This does not prevent the membrane from being able to allow a small fraction of some other gas component which constitutes a large part of the gas mixture, for example hydrogen, to pass through, or prevent the membrane from being able to allow a large fraction of yet another gas component, which constitutes a small part of the gas mixture, to pass through. The selective permeability can also relate to a certain group of gas components, for example CO and CO₂.

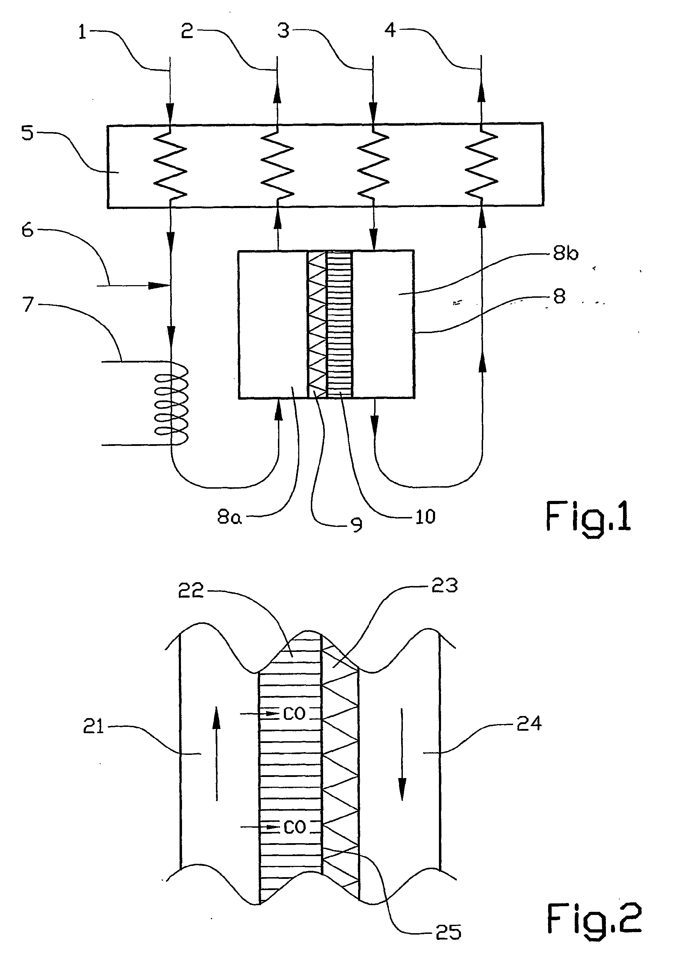

Figure 1 shows a diagram of a first advantageous embodiment of the invention. A first incoming flow 1, containing a mixture of water and primary fuel, is conducted, by way of a heat exchanger 5 and a heater 7, into a first chamber 8a in a reformer unit 8. An air flow 6 is supplied to the first incoming flow 1 between the heat exchanger 5 and the heater 7. A ceramic membrane 10, which exhibits a selective permeability for CO₂, divides the reformer unit 8 into the first chamber 8a and a second chamber 8b. On its side which faces the first chamber 8a, i.e. its primary side, the membrane 10 is coated with a layer of reformer catalyst 9. In a first outgoing flow 2, reaction products, principally hydrogen and water, are conducted out from the first chamber 8a by way of the heat exchanger 5. In order to utilize the heat in this first outgoing flow 2, heat exchange takes places with the first (cold) incoming flow 1 in the heat exchanger 5. The first outgoing flow 2 can then be conducted onwards for further treatment or directly to a fuel cell (not shown).

A number of chemical reactions, the most important of which are the conversion of hydrocarbon compounds, by means of steam reforming and/or partial oxidation, into hydrogen, CO and CO₂, and what is termed the WGS reaction (reaction 1), take place in the first chamber 8a, in particular at the reformer catalyst 9. Due to the fact that the membrane 10 is selectively permeable for CO₂, CO₂ will be transported through the membrane 10 from the first chamber 8a to the second chamber 8b. The effect of this transport is that the concentration of CO₂ in the first chamber 8a decreases or, alternatively, is maintained constant or at least prevented from increasing to the extent which would be the case in the absence of the membrane 10, something which in turn has the effect that the WGS reaction can be driven further to the right, i.e. towards an increase in the formation of hydrogen and a decrease in the formation of CO. Due to the fact that the reformer catalyst is 9 applied to the membrane 10, CO₂ will in the main be formed in the immediate vicinity of the membrane 10, thereby favoring the removal of the CO₂. It is naturally also possible to coat other surfaces in the first chamber 8a with reformer catalyst as well.

The reformer catalyst 9 preferably catalyzes both the WGS reaction and the conversion of the hydrocarbon compounds. The reformer catalyst preferably contains Ni and/or precious metals such as Pt, Rh and Pd.

A second incoming flow 3 containing a mixture of air and water, is conducted, by way of the heat exchanger 5, into the second chamber 8b of the reformer unit 8. This second incoming flow 3 functions as a flushing gas and entrains the CO₂ which has been transported from the first chamber 8a to the second chamber 8b out of the reformer unit 8 and forms a second outgoing flow 4, principally containing air, water and CO₂, which can, for example, be conducted onward, by way of the heat exchanger 5, through an exhaust pipe (not shown).

In order to recover the greatest possible quantity of heat, and in order to minimize thermal stresses on the membrane 10, the second incoming flow 3 is arranged to perform heat exchange with the second outgoing flow 4. In addition, the two flows 1, 3 coming into the reformer unit 8 and the two flows 2, 4 leaving the reformer unit 8 are arranged so that they flow in countercurrent along the membrane 10. This countercurrent construction results in a large partial pressure difference for CO₂ across membrane 10 being achieved along the whole of its length, and the fact that the CO₂ is also principally formed in the immediate vicinity of the membrane 10, in the first chamber 8a, results in the greatest possible partial pressure difference for CO₂ being achieved across the membrane 10, in turn leading to the greatest possible transport of CO₂ through the membrane 10. The WGS reaction can therefore be driven very far to the right, i.e. towards what is essentially complete formation of hydrogen and the formation of what is only a very small quantity of CO.

The heater 7 is principally intended to provide an energy contribution when the system is starting up. Once the reactions have started, the partial oxidation, in particular, provides sufficient heat to the system.

In order to decrease the transport of water across the membrane 10, the water content in the second incoming flow 3 is the same as that in the gas mixture in the first chamber 8a. Such transport could lead to other components being entrained.

The heat exchange is arranged in countercurrent in order to achieve the highest possible efficiency.

The fact that the air flow 6, which is designed for the heat-generating partial oxidation, is supplied separately to the first incoming flow 1 improves the possibilities for controlling the system optimally.

Due to the fact that the membrane 10 is manufactured from a ceramic material, it tolerates high temperatures, thereby making it possible to locate the membrane 10 in a reaction chamber in which the reforming process is run at high temperatures, resulting in high reaction rates. Due to the fact that the membrane 10 enables CO₂ to be removed selectively, the WGS reaction can be driven far to the right despite the fact that the temperature is high. An additional process step for the WGS reaction is consequently not required. The WGS reaction can be driven even further to the right by means of additional advantageous arrangements such as coating the membrane surface with catalyst and arranging the flows in countercurrent. When system parameters such as mass flows, temperature, pressure and dwell time are controlled satisfactorily, this embodiment of the invention provides a very efficient formation of hydrogen and a very low concentration of CO in the flow of hydrogen fuel to a fuel cell. This thereby decreases the need for a cleaning step for separating CO from the flow of hydrogen fuel to the fuel cell. When the system is controlled optimally, the invention even provides the possibility of eliminating this cleaning step entirely. The high reaction rates in the reformer unit 8 furthermore result in it being possible to make the dwell time in the reformer unit 8 short, thereby enabling the unit to be made small and light.

The membrane 10 preferably exhibits a very high degree of permeability for CO₂ and a very low degree of permeability for other gas components such as hydrogen and CO.

Figure 2 shows a diagram of a ceramic membrane which exhibits a selective permeability for CO for cleaning a flow of hydrogen fuel. A flow of a gas mixture (hydrogen fuel) from which CO is to be separated passes through a first channel 21. The gas mixture is contacted by a second ceramic membrane 22 which exhibits a selective permeability for CO, with CO being transported through the membrane 22. A layer of oxidation catalyst 23 is applied to the secondary side 25 of the second membrane 22, and a flow of an oxygen-containing flushing gas, for example air, passes through a second channel 24 at the secondary side 25 of the second membrane 22. When CO reaches the secondary side 25 of the second membrane 22, an oxidation of CO to CO₂ will take place due to the presence of the oxidation catalyst 23 and the oxygen in the flushing gas in the second channel 24. This oxidation gives rise to a very low concentration (low partial pressure) of CO at the secondary side 25 of the second membrane 22, i.e. the oxidation gives rise to a large concentration gradient for CO across the membrane 22. The said concentration gradient increases the transport of CO through the second membrane 22, which transport can therefore be significant without requiting a high fall in pressure across the membrane 22.

In order to increase the CO concentration gradient across the membrane 22 still further, the flows in the channels 21, 24 pass in opposite directions, so that a countercurrent construction is obtained. This makes it possible to obtain a useful concentration gradient of CO across the membrane 22 over the whole of the length of the membrane 22 even if all the CO is not immediately oxidized at the catalyst.

The oxidation catalyst preferably contains a precious metal such as Pt.

The heat which is formed in the oxidation process is preferably recovered and supplied to the reforming process.

The system for generating hydrogen fuel for a fuel cell is simple, robust, reliable and light and does not require a great deal of space. Additionally it is well-suited for most types of fuel generation system and can, for example, replace processes/devices for selective oxidation or hydrogen gas-permeable membranes in conventional systems. Naturally, said second membrane 22 can be the only membrane in the system.

The system shown in Fig. 2 is well-suited for being combined with the inventive embodiment shown in Fig. 1 for example with a view to further purifying the flow of fuel to the fuel cell or in order to ensure the quality of the fuel. In such a case, the gas mixture in the first channel 21 can, for example, consist of the second outgoing flow 2 shown in Figure 1. The flushing gas which passes through the second channel 24 can consist of a separate flow; alternatively, said flushing gas can consist of the second incoming flow 3 shown in Figure 1. In such a case, the cleaning step for separating CO can preferably be accommodated in the heat exchanger 5 shown in Figure 1. In this way, the heat which is formed in connection with the CO oxidation is recovered at the same time as the system can be made very compact. While the concentration of CO₂ in the second incoming flow 3 will then increase somewhat, something which can in turn affect the transport of CO₂ through the first membrane 10, this effect will be small as long as the concentration of CO is kept low in the second outgoing flow 2.

The second membrane 22 preferably also exhibits selective permeability for CO₂. While this gas is not harmful to the fuel cell, it dilutes the hydrogen and requires space. By means of separating off CO₂ as well, the fuel flow can be further enriched in hydrogen thereby making it possible for the fuel cell to use a larger proportion of the hydrogen before the partial pressure becomes too low.

The membrane 22 preferably exhibits a very high permeability for CO and CO₂ and a very low permeability for hydrogen.

Each membrane 10, 22 is constructed from ceramic material and expediently exhibits a microporous structure in which the diameter of the pores is in the main less than 20Å (angstrom). The membrane is preferably manufactured from a zeolite or zeolite-like material which generally exhibits satisfactory tolerance of heat, chemicals and abrasion and which is well-suited for being coated with a catalyst material. Examples of suitable zeolite and zeolite-like materials are ZSM-5 and silicalite-1. Zeolites are found in a number of different types and consist generally of a porous, crystalline material which is composed of silicon oxides (SiOₓ) in which some of the Si can be replaced with aluminum (Al). In a zeolite-nice material, Si or Al can be replaced with, for example, P or B. The replacement of Si, for example, with Al gives rise to charge vacancies, something which requires counterions of some sort, which can vary. The pore size is approx. 3-10Å, which corresponds approximately to the size of gas molecules. Consequently, a gas molecule which has been adsorbed in a pore prevents the transport of other gas molecules through the same pore.

The mechanism for the increased transport of carbon monoxide and/or carbon dioxide as compared with that of hydrogen is based on increasing the concentration of CO/CO₂ and blocking the mobility of the hydrogen in the membrane. A high concentration of CO/CO₂ can be obtained by selecting a membrane having a high affinity for CO/CO₂ and/or modifying the membrane so that CO/CO₂ can adsorb to the walls in the pores of the membrane. This modification can be effected by means of incorporating ions by exchange or adsorbing molecules which have a high affinity for CO/CO₂. Due to the fact that CO is polar and CO₂ can be polarized, these molecules combine electrostatically to ions which have been incorporated by exchange. The electronegative oxygen atom can also form hydrogen bonds with adsorbed ions or molecules. Hydrogen is a small nonpolar molecule which has low affinity for these adsorbed ions or molecules.

Transport of the hydrogen can be blocked if the membrane possesses very small pores (< approx. 10-20 Å) and is stable, i.e. does not swell on adsorption. Due to the fact that CO and CO₂ have a high affinity for the membrane and the ions or molecules which have been introduced by exchange, they can pass through without being repulsed.

Alkaline metals and alkaline earth metals, such as Na, Ba and Ca, are suitable when modifying zeolites for the purpose of forming a CO₂-selective membrane. Transition metals, such as. Pt, Cu, Fe, Cr and Co are suitable when modifying zeolites for the purpose of forming a CO-selective membrane.

A carrier is preferably arranged to support the membranes 10 and 22 in Figures 1 and 2. An example of a suitable carrier is a porous α-Al₂O₃ whose pore size is sufficiently large not to affect the separation process.

Ceramic microporous membranes provide good possibilities for obtaining satisfactory selectivity and can be used within a large temperature interval. Furthermore, microporous membranes provide good possibilities for obtaining a high flux through the membrane. A high flux results in it being possible for the unit to be made light and compact while retaining the same separation performance, and also means that no major (pump) losses arise with regard to the transport of CO₂, for example, through the membrane. A high flux also results in the membrane being less sensitive to defects, such as minor cracks or leakiness. This is due to the fact that the flow which slips past the membrane through cracks, for example, can be roughly constant irrespective of whether the flux through the membrane is low or high. If the flux through the membrane is high, the total flow through the membrane is then large, with the relative contribution from the portion of the flow which slips through the membrane being small.

The invention is not limited to the above-described implementation examples, and it is possible to conceive of a number of modifications within the scope of the subsequent patent claims.

For example, CO₂-selective membranes can be arranged to be placed at other sites in the system since the removal of CO₂ from the flow of hydrogen fuel increases the proportion of hydrogen in the flow which reaches the fuel cell. It is consequently possible to use several such membranes.

Another example is that it is also possible to locate catalyst material at sites other than on the membrane.

The embodiment of the invention (figure 1) can be arranged in alternative ways. For example, the air flow 6 can be conducted directly into the first chamber 8a and the heater 7 can be arranged in different ways such as inside the reformer unit 8. In addition, it is naturally possible to use several heaters at different sites in the system, and the heater/heaters can be of different types such as electrical or chemical (by means, for example, of combusting primary fuel). It is furthermore possible to use several membranes and several reformer units. These units can be arranged in series or in parallel.

## Claims

1. A system for generating hydrogen fuel for a fuel cell, comprising a device for implementing a reforming process which converts primary fuel into hydrogen and also a membrane (10) which exhibits selective permeability for CO₂, **characterized in that** the membrane (10) is essentially composed of ceramic material exhibiting a microporous structure.

2. The system as claimed in claim 1, **characterized in that** the primary side of the membrane (10) faces a first chamber (8a), which first chamber (8a) is intended as a reaction chamber for at least a part of the reforming process.

3. The system as claimed in claim 2, **characterized in that** the first chamber (8a) is intended as a reaction chamber for a reforming process which comprises converting primary fuel to hydrogen and CO/CO₂, inter alia.

4. The system as claimed in claim 2 or 3, **characterized in that** the primary side of the membrane (10) is at least partially coated with a layer of reformer catalyst (9).

5. The system as claimed in claim 3 or 4, **characterized in that** the system is arranged to principally supply primary fuel, water and air to the first chamber (8a), and **in that** the supply of air is separately arranged such that the proportion of air in the first chamber (8a) can be varied.

6. The system as claimed in one of claims 2 to 5, **characterized in that** the secondary side of the membrane (10) faces a second chamber (8b), through which second chamber a flow of flushing gas, preferably air, is arranged to pass.

7. The system as claimed in claim 6, **characterized in that** the flushing gas has a water content which approximately corresponds to the water content in the first chamber (8a).

8. The system as claimed in claim 6 or 7, **characterized in that** the flow of flushing gas is arranged to pass along the membrane (10) in essentially the opposite direction to a main direction of flow in the first chamber (8a).

9. The system as claimed in one of claims 2 to 8, **characterized in that** the system comprises at least one heat exchanger (5) which is arranged to transfer heat between at least one flow (2,4) which is leaving a chamber (8 a, 8b) and at least one flow (1, 3) which is entering a chamber (8a, 8b).

10. The system as claimed in one of claims 2 to 9, **characterized in that** the system comprises a second membrane (22) which exhibits selective permeability for CO, which second membrane (22) is arranged to separate CO from a flow of hydrogen fuel (2) which is leaving the reforming process device.

11. The system as claimed in claim 10, **characterized in that** the second membrane (22) is essentially composed of ceramic material.

12. The system as claimed in claim 10 or 11, **characterized in that** the primary side of the second membrane (22) faces a first channel (21), through which first channel the flow of hydrogen fuel (2) is arranged to pass, and **in that** the secondary side (25) of the second membrane (22) is at least partially coated with a layer of oxidation catalyst (23).

13. The system as claimed in claim 12, **characterized in that** the secondary side (25) of the second membrane (22) faces a second channel (24), through which second channel (24) a flow of an oxygen-containing flushing gas, preferably air, is arranged to pass in a direction which is essentially opposite to a main direction of flow in the first channel (21).

14. The system as claimed in claims 6 and 13, **characterized in that** the gas flow in the second channel (24) consists of a flow (3) which is entering the second chamber (8b).

15. The system as claimed in one of claims 10 to 14, **characterized in that** the second membrane (22) also exhibits selective permeability for CO₂

16. The system as claimed in one of claims 10 to 15, **characterized in that** the second membrane (22) exhibits a microporous structure.

17. The system as claimed in any on of the preceding claims, **characterized in that** at least one of the first and/or second membranes (10,22) exhibits a zeolite or zeolite-like structure.

18. The system as claimed in one of the preceding claims, **characterized in that** the system is arranged in a mobile application.

## Patentansprüche

1. System zum Erzeugen von Wasserstoff als Brennstoff für eine Brennstoffzelle mit einer Vorrichtung zum Implementieren eines Reformierverfahrens, das primären Brennstoff in Wasserstoff konvertiert, und mit einer Membran (10), die eine selektive Permeabilität für CO₂ aufweist, **dadurch gekennzeichnet, dass** die Membran (10) im Wesentlichen aus einem keramischen Material besteht, das eine mikroporöse Struktur aufweist.

2. System nach Anspruch 1, wobei eine primäre Seite der Membran (10) einer ersten Kammer (8a) zugewandt ist, wobei die erste Kammer (8a) als eine Reaktionskammer für zumindest einen Teil des Reformierverfahrens ausgelegt ist.

3. System nach Anspruch 2, wobei die erste Kammer (8a) als Reaktionskammer für ein Reformierverfahren ausgelegt ist, der eine Konversion von primärem Brennstoff zu Wasserstoff und, unter anderem, CO/CO₂ umfasst.

4. System nach Anspruch 2 oder 3, wobei die primäre Seite der Membran (10) zumindest teilweise mit einer Schicht eines Reformierkatalysators (9) beschichtet ist.

5. System nach Anspruch 3 oder 4, wobei das System dazu ausgelegt ist, hauptsächlich primären Brennstoff, Wasser und Luft der ersten Kammer (8a) zuzuführen, und wobei die Zufuhr von Luft separat angeordnet ist, so dass der Luftanteil in der ersten Kammer (8a) variierbar ist.

6. System nach einem der Ansprüche 2 bis 5, wobei eine sekundäre Seite der Membran (10) einer zweiten Kammer (8b) zugewandt ist, wobei die zweite Kammer mit einem Strom von Spülgas, vorzugsweise Luft, durchströmbar ist.

7. System nach Anspruch 6, wobei das Spülgas einen Wassergehalt aufweist, der ungefähr dem Wassergehalt in der ersten Kammer (8a) entspricht.

8. System nach Anspruch 6 oder 7, wobei der Spülgasstrom dazu ausgelegt ist, entlang der Membran in im Wesentlichen entgegengesetzter Richtung zu der Hauptströmungsrichtung in der ersten Kammer (8a) zu strömen.

9. System nach einem der Ansprüche 2 bis 8, wobei das System zumindest einen Wärmetauscher (5) aufweist, der dazu ausgelegt ist, Wärme zwischen zumindest einem Strom (2; 4), der eine Kammer verlässt (8a, 8b), und zumindest einem Strom (1, 3), der in eine Kammer (8a, 8b) eintritt, zu transferieren.

10. System nach einem der Ansprüche 2 bis 9, wobei das System weiterhin eine zweite Membran (22) aufweist, die eine selektive Permeabilität für CO aufweist, wobei die zweite Membran dazu ausgelegt ist, CO aus einem Strom von Wasserstoffbrennstoff (2), der die Vorrichtung für das Reformierverfahren verlässt, zu separieren.

11. System nach Anspruch 10, wobei die zweite Membran im Wesentlichen aus einem keramischen Material besteht.

12. System nach Anspruch 10 oder 11, wobei eine primäre Seite der zweiten Membran (22) einem ersten Kanal (21) zugewandt ist, wobei der ersten Kanal mit einem Strom von Wasserstoffbrennstoff (2) durchströmbar ist, und wobei eine sekundäre Seite (25) der zweiten Membran (22) zumindest teilweise mit einer Schicht eines Oxidationskatalysators (23) beschichtet ist.

13. System nach Anspruch 12, wobei die sekundäre Seite (25) der zweiten Membran (22) einem zweiten Kanal (24) zugewandt ist, wobei der zweiten Kanal (24) mit einem Strom an Sauerstoffhaltigem Spülgas, vorzugsweise Luft, in einer Richtung die im Wesentlichen entgegengesetzt zu der Hauptströmungsrichtung der Strömung in dem ersten Kanal (21) ist, durchströmbar ist.

14. System nach Anspruch 6 und 13, wobei der Gasstrom im zweiten Kanal (24) ein Strom (3) ist, der in die zweite Kammer (8b) eintritt.

15. System nach einem der Ansprüche 10 bis 14, wobei die zweite Membran (22) auch eine selektive Permeabilität für CO₂ aufweist.

16. System nach einem der Ansprüche 10 bis 15, wobei die zweite Membran (22) eine mikroporöse Struktur aufweist.

17. System nach einem der vorhergehenden Ansprüche, wobei zumindest eine der ersten und/oder zweiten Membran (10, 2) ein Zeolit ist oder eine Zeolitartige Struktur aufweist.

18. System nach einem der vorhergehenden Ansprüche, wobei das System in einem beweglichen Einsatzbereich angeordnet ist.

## Revendications

1. Système de génération de combustible à hydrogène pour une pile à combustible, comprenant un dispositif de mise en place d'un procédé de reformage qui convertit un combustible primaire en hydrogène et également une membrane (10) présentant une perméabilité sélective au CO₂, **caractérisé en ce que** la membrane (10) est essentiellement composée d'un matériau céramique présentant une structure microporeuse.

2. Système selon la revendication 1, **caractérisé en ce que** le côté primaire de la membrane (10) fait face à une première chambre (8a), laquelle première chambre (8a) est destinée à être une chambre réactionnelle pour au moins une partie du procédé de reformage.

3. Système selon la revendication 2, **caractérisé en ce que** la première chambre (8a) est destinée à être une chambre réactionnelle pour un procédé de reformage qui comprend une conversion de combustible primaire en hydrogène et en CO/CO₂, entre autres.

4. Système selon la revendication 2 ou 3, **caractérisé en ce que** le côté primaire de la membrane (10) est au moins partiellement revêtu d'une couche de catalyseur de reformage (9).

5. Système selon la revendication 3 ou 4, **caractérisé en ce que** le système est agencé pour fournir principalement un combustible primaire, de l'eau et de l'air à la première chambre (8a), et la fourniture d'air est agencée séparément de sorte que la proportion en air dans la première chambre (8a) peut être modifiée.

6. Système selon l'une quelconque des revendications 2 à 5, **caractérisé en ce que** le côté secondaire de la membrane (10) fait face à une seconde chambre (8b), à travers laquelle un écoulement de gaz de rinçage, de manière préférée de l'air, doit passer.

7. Système selon la revendication 6, **caractérisé en ce que** le gaz de rinçage présente une teneur en eau qui correspond approximativement à la teneur en eau dans la première chambre (8a).

8. Système selon la revendication 6 ou 7, **caractérisé en ce que** l'écoulement de gaz de rinçage doit passer le long de la membrane (10) dans une direction essentiellement opposée à une direction principale d'écoulement dans la première chambre (8a).

9. Système selon l'une quelconque des revendications 2 à 8, **caractérisé en ce que** le système comprend au moins un échangeur de chaleur (5) qui est agencé pour transférer de la chaleur entre au moins un écoulement (2, 4) qui quitte une chambre (8a, 8b) et au moins un écoulement (1, 3) qui entre dans une chambre (8a, 8b).

10. Système selon l'une quelconque des revendications 2 à 9, **caractérisé en ce que** le système comprend une seconde membrane (22) qui présente une perméabilité sélective au CO, laquelle seconde membrane (22) est agencée pour séparer du CO à partir d'un écoulement de combustible à hydrogène (2) quittant le dispositif correspondant au procédé de reformage.

11. Système selon la revendication 10, **caractérisé en ce que** la seconde membrane (22) est essentiellement composée d'un matériau céramique.

12. Système selon la revendication 10 ou 11, **caractérisé en ce que** le côté primaire de la seconde membrane (22) fait face à un premier canal (21), à travers lequel l'écoulement du combustible à hydrogène (2) doit passer, et le côté secondaire (25) de la seconde membrane (22) est au moins partiellement revêtu d'une couche de catalyseur d'oxydation (23).

13. Système selon la revendication 12, **caractérisé en ce que** le côté secondaire (25) de la seconde membrane (22) fait face à un second canal (24), à travers lequel un écoulement d'un gaz de rinçage contenant de l'oxygène, de manière préférée de l'air, doit passer dans une direction qui est essentiellement opposée à une direction principale d'écoulement dans le premier canal (21).

14. Système selon les revendications 6 à 13, **caractérisé en ce que** l'écoulement de gaz dans le second canal (24) est constitué d'un écoulement (3) qui entre dans la seconde chambre (8b).

15. Système selon l'une quelconque des revendications 10 à 14, **caractérisé en ce que** la seconde membrane (22) présente également une perméabilité sélective au CO₂.

16. Système selon l'une quelconque des revendications 10 à 15, **caractérisé en ce que** la seconde membrane (22) présente une structure microporeuse.

17. Système selon l'une quelconque des revendications précédentes, **caractérisé en ce qu'**au moins une parmi les première et/ou seconde membranes (10, 22) présente une structure à zéolites ou zéolitiforme.

18. Système selon l'une quelconque des revendications précédentes, **caractérisé en ce que** le système est agencé dans une application mobile.
